# EUROPÄISCHE PATENTSCHRIFT

(11) **EP 3 545 359 B1**
(45) Veröffentlichungstag und Bekanntmachung des Hinweises auf die Patenterteilung: **23.12.2020**
(21) Anmeldenummer: 18734817.2
(22) Anmeldetag: 28.06.2018
(51) Int. Cl.: G02F 1/13357, F21V 8/00

(54) **BELEUCHTUNGSEINRICHTUNG FÜR EINEN BILDSCHIRM MIT EINEM FREIEN UND EINEM EINGESCHRÄNKTEN SICHTMODUS**
ILLUMINATION DEVICE FOR A SCREEN WITH A FREE VIEWING MODE AND A RESTRICTED VIEWING MODE
DISPOSITIF D'ILLUMINATION POUR UN ÉCRAN À MODES DE VISUALISATION DÉGAGÉE ET RESTREINTE

(30) Priorität: 30.06.2017 DE 102017006285
(43) Veröffentlichungstag der Anmeldung: 02.10.2019
(73) Patentinhaber: siOPTICA GmbH, 07745 Jena (DE)
(72) Erfinder: HEBER, André, 99425 Weimar (DE); SCHROETER, Uwe, 07774 Dornburg-Camburg (DE); SCHWARZ, Juergen, 99510 Apolda (DE); NARI, Ambrose Peter, 07743 Jena (DE); KLIPPSTEIN, Markus, 07751 Jena (DE); ALKHIMENKO, Stepan, 07743 Jena (DE)
(74) Vertreter: Gleim Petri Oehmke Patent- und Rechtsanwaltspartnerschaft mbB
(86) Internationale Anmeldenummer: PCT/EP2018/067473
(87) Internationale Veröffentlichungsnummer: WO 2019/002496

(56) Entgegenhaltungen:
- EP-A1- 2 270 556
- WO-A1-2017/089482
- CN-A- 105 487 292

## Beschreibung

### Gebiet der Erfindung

In den letzten Jahren wurden große Fortschritte zur Verbreiterung des Sehwinkels bei LCDs erzielt. Allerdings gibt es oft Situationen, in denen dieser sehrgroße Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dem entsprechend brauchen die Menschen eine Kontrolle darüber, wer diese sensiblen Daten sehen darf; sie müssen wählen können zwischen einem weiten Betrachtungswinkel, um Informationen auf ihrem Display mit anderen zu teilen, z.B. beim Betrachten von Urlaubsfotos oder auch für Werbezwecke. Andererseits benötigen sie einen kleinen Betrachtungswinkel, wenn sie die Bildinformationen vertraulich behandeln wollen.

Eine ähnliche Problemstellung ergibt sich im Fahrzeugbau: Dort darf der Fahrer bei eingeschaltetem Motor nicht durch Bildinhalte, wie etwa digitale Entertainmentprogramme, abgelenkt werden, während der Beifahrer selbige jedoch auch während der Fahrt konsumieren möchte. Mithin wird ein Bildschirm benötigt, der zwischen den entsprechenden Darstellungsmodi umschalten kann.

### Stand der Technik

Zusatzfolien, die auf Mikro-Lamellen basieren, wurden bereits für mobile Displays eingesetzt, um deren optischen Datenschutz zu erreichen. Allerdings waren diese Folien nicht (um)schaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

Die US 6,765,550 beschreibt einen solchen Sichtschutz durch Mikro-Lamellen. Größter Nachteil ist hier die mechanische Entfernung bzw. der mechanische Anbau des Filters sowie der Lichtverlust im geschützten Modus.

In der US 5,993,940 wird der Einsatz einer Folie beschrieben, die auf ihrer Oberfläche gleichmäßig angeordnete, kleine Prismenstreifen hat, um einen Privacy-Modus zu erzielen. Entwicklung und Herstellung sind recht aufwändig.

In der WO 2012/033583 wird die Umschaltung zwischen freier und eingeschränkter Sicht vermittels der Ansteuerung von Flüssigkristallen zwischen sogenannten "chromonischen" Schichten erzeugt. Hierbei entsteht ein Lichtverlust und der Aufwand ist recht hoch.

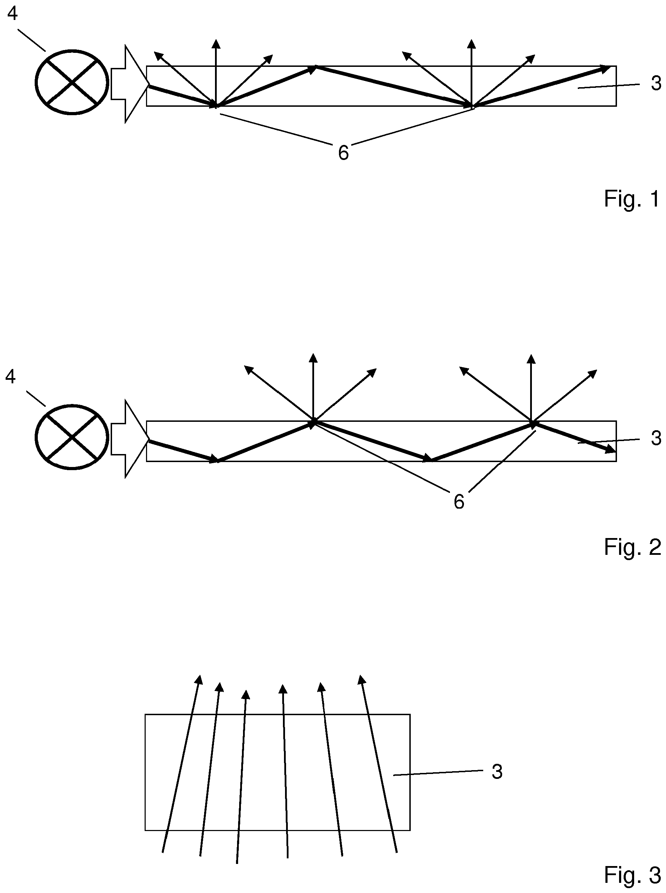

Die Schrift US 2009/0067156 offenbart eine Vielzahl an Ideen, um ein Beleuchtungssystem und ein Bildschirmgerät auszugestalten. Die dort in den Figuren 3A und 3B abgebildete Variante verwendet insbesondere zwei Hintergrundbeleuchtungen, sogenannte Backlights, bestehend aus keilförmigen Lichtleitern, und ein LCD-Panel, wobei das hintere Backlight 40 zwingend einen weiten Beleuchtungswinkel und das vordere Backlight 38 zwingend einen schmalen Beleuchtungswinkel erzeugen soll. Unklar bleibt hierbei jedoch die Funktionsweise, wie das Backlight 38 einen schmalen Beleuchtungswinkel erzeugen soll, ohne dass das Licht mit einem weiten Beleuchtungswinkel, welches vom Backlight 40 herrührt, beim Durchgang durch das Backlight 38 wesentlich in Licht mit einem schmalen Beleuchtungswinkel umgewandelt wird.

Zur Ausgestaltung nach Fig. 5 der US 2009/0067156 ist zu bemerken, dass beide Lichtleiter 46 und 48 jeweils "narrow light", also Licht mit einem schmalen Beleuchtungswinkel, produzieren. Das Licht des Lichtleiters 48 wird erst durch einen aufwändig mit Prismenstrukturen zu erstellenden Teilspiegel 50 in "wide light", also Licht mit einem weiten Beleuchtungswinkel, umgewandelt. Diese Umwandlung beschneidet die Lichtintensität extrem, da das zunächst in einen schmalen Beleuchtungswinkel abgestrahlte Licht, welches als einziges Licht zur Verfügung steht, dann in einen großen Beleuchtungswinkel, i.d.R. den Halbraum, aufgefächert wird. Dies hat zur Folge, dass je nach Parametern die Helligkeit um einen Faktor 5 oder mehr verringert wird (bezogen auf die Leuchtdichte). Es handelt sich also um eine praktisch wenig relevante Ausgestaltung.

In der Ausgestaltung nach Fig. 7 der US 2009/0067156 ist zwingend eine Phosphorschicht notwendig, diese soll UV-Licht in sichtbares Licht umwandeln. Dieser Aufwand ist groß und bei dem Wunsch nach hinreichend Licht aus dem Backlight, um ein LCD-Panel lesbar zu beleuchten, werden sehr große Intensitäten an UV-Licht benötigt. Mithin ist dies teuer, aufwändig und schon von der Abschirmung der benötigten UV-Strahlung her nicht praktikabel.

Die US 2012/0235891 beschreibt ein sehr aufwändiges Backlight in einem Bildschirm. Dort kommen gemäß Fig. 1 und 15 nicht nur mehrere Lichtleiter zum Einsatz, sondern auch weitere komplexe optische Elemente wie etwa Mikrolinsenelemente 40 und Prismenstrukturen 50, die das Licht von der hinteren Beleuchtung auf dem Weg zur vorderen Beleuchtung umformen. Dies ist teuer und aufwändig umzusetzen und ebenso mit Lichtverlust verbunden. Gemäß der Variante nach Fig. 17 in der US 2012/0235891 produzieren beide Lichtquellen 4R und 18 Licht mit einem schmalen Beleuchtungswinkel, wobei das Licht von der hinteren Lichtquelle 18 erst aufwändig in Licht mit einem großen Beleuchtungswinkel, umgewandelt wird. Diese komplexe Umwandlung ist - wie weiter oben schon bemerkt - stark helligkeitsmindernd.

Gemäß der JP 2007-155783 werden spezielle, aufwändig zu berechnende und herzustellende optische Oberflächen 19 genutzt, die dann Licht je nach Lichteinfallswinkel in verschiedene schmale oder breite Bereiche ablenken. Diese Strukturen ähneln Fresnel-Linsen. Ferner sind Störflanken vorhanden, die Licht in unerwünschte Richtungen ablenken. Somit bleibt unklar, ob wirklich sinnvolle Lichtverteilungen erreicht werden können.

Nach Lehre der GB 2428128 A werden zur Erzielung einer eingeschränkten Sicht zusätzliche, vom Bildschirm deutlich entfernte Lichtquellen, die ein auf dem Bildschirm angebrachtes Hologramm beleuchten, verwendet, um den Seiteneinblick mit speziellen Wellenlängen zu überlagern. Nachteilig sind hierbei der benötigte Abstand der Lichtquellen vom Bildschirm und der Aufwand, entsprechende Hologramme herzustellen.

In der US 2013/0308185 wird ein spezieller, mit Stufen ausgebildeter Lichtleiter beschrieben, der Licht auf einer Großfläche in verschiedene Richtungen abstrahlt, je nachdem, aus welcher Richtung er von einer Schmalseite aus beleuchtet wird. Im Zusammenspiel mit einer transmissiven Bildwiedergabeeinrichtung, z.B. einem LC-Display, kann somit ein zwischen freiem und eingeschränktem Sichtmodus schaltbarer Bildschirm erzeugt werden. Nachteilig ist hierbei u.a., dass der eingeschränkte Sichteffekt entweder nur für links/rechts oder aber für oben/unten, nicht aber für links/rechts/oben/unten gleichzeitig erzeugt werden kann, wie es etwa für bestimmte Zahlungsvorgänge nötig ist. Hinzu kommt, dass auch im eingeschränkten Sichtmodus aus geblockten Einsichtwinkeln immer noch Restlicht sichtbar ist.

Die WO 2015/121398 der Anmelderin beschreibt einen Bildschirm der eingangs beschriebenen Art. Dort sind für die Umschaltung der Betriebsarten essentiell Streupartikel im Volumen des entsprechenden Lichtleiters vorhanden. Die dort gewählten Streupartikel aus einem Polymerisat weisen jedoch in der Regel den Nachteil auf, dass Licht aus beiden Großflächen ausgekoppelt wird, wodurch etwa die Hälfte des Nutzlichtes in die falsche Richtung, nämlich zur Hintergrundbeleuchtung hin, abgestrahlt und dort aufgrund des Aufbaus nicht in hinreichendem Umfang recycelt werden kann. Überdies können die im Volumen des Lichtleiters verteilten Streupartikel aus Polymerisat unter Umständen, insbesondere bei höherer Konzentration, zu Streueffekten führen, die den Sichtschutzeffekt in der geschützten Betriebsart vermindern.

In der WO 2017/089482 A1 der Anmelderin wird eine Beleuchtungseinrichtung für einen Bildschirm beschrieben, der in zwei Betriebsarten für einen freien und einen eingeschränkten Sichtmodus betrieben werden kann. Vor einer Hintergrundbeleuchtung ist ein Lichtleiter angeordnet, der Auskoppelemente aufweist. Beim Durchgang durch den Lichtleiter wird von der Hintergrundbeleuchtung in der Betriebsart B2 ausgestrahltes Licht nur geringfügig außerhalb eines beschränkten Winkelbereichs abgestrahlt.

In der CN 105 487 292 A wird eine Beleuchtungseinrichtung beschrieben, die ebenfalls in zwei Betriebsarten für einen normalen und einen privaten Sichtmodus betrieben werden kann. Ein Lichtleiter mit Auskoppelelementen ist vor einer Hintergrundbeleuchtung angeordnet. Diese Schrift bildet die Grundlage für die zweiteilige Form von Anspruch 1.

Den vorgenannten Verfahren und Anordnungen ist in der Regel der Nachteil gemein, dass sie die Helligkeit des Grundbildschirms deutlich reduzieren und / oder ein aktives, zumindest jedoch ein spezielles, optisches Element zur Modi-Umschaltung benötigen und / oder eine aufwändige sowie teure Herstellung erfordern und / oder die Auflösung im frei betrachtbaren Modus reduzieren.

Typischerweise werden Lichtleiter in Hintergrundbeleuchtungen für LCD-Bildschirme aus Kunststoff (z.B. PMMA oder Polycarbonat) gefertigt, z.B. im fürdie Massenherstellung geeigneten und kostengünstigen Spritzgussverfahren. Die so hergestellten Lichtleiter weisen dann in der Regel grobe, makroskopische und mit bloßem Auge gut erkennbare Oberflächenverletzungen auf, die das Licht auskoppeln. Aufgrund dieser groben Strukturen sind die Haze-Werte derartiger Lichtleiter in der Regel sehr groß, d.h. sie können Werte von 15% oder noch deutlich mehr annehmen. Derartige Streueigenschaften machen es unmöglich, bereits fokussiertes Licht auf den Großflächen durch einen solchen Lichtleiter ohne merkliche Beeinflussung hindurchdringen zu lassen. Hinzu kommt, dass Lichtleiter im Stand der Technik immer noch weitere optische Schichten benötigen, um für LCD-Panels gut nutzbares Licht gleichmäßig verteilt abzustrahlen. Zu diesem Zweck kommen z.B. Folien wie Diffusoren, helligkeitsverstärkende Filme (BEF/DBEF) oder auf der Rückseite Reflektoren, die das auf die Rückseite ausgekoppelte Licht zurückwerfen, zum Einsatz. Besonders wegen der groben Auskoppelstrukturen, die oftmals als Streuelemente ausgelegt sind, ist eine Anwendung ohne Diffusor nicht ohne deutliche Einbußen hinsichtlich der Lichthomogenität möglich.

### Beschreibung der Erfindung

Es ist daher Aufgabe der Erfindung, eine Beleuchtungseinrichtung zu beschreiben, durch welche in Zusammenwirkung mit einem Bildschirm eine sichere Darstellung von Informationen vermittels eines wahlweise eingeschränkten Betrachtungswinkels realisiert werden kann, wobei in einer weiteren Betriebsart eine freie, möglichst im Betrachtungswinkel uneingeschränkte Sicht möglich sein soll. Die Erfindung soll mit einfachen Mitteln möglichst preisgünstig umsetzbar sein. In beiden Betriebsarten soll eine möglichst hohe Auflösung, besonders bevorzugt die native Auflösung des verwendeten Bildschirms, sichtbar sein. Ferner soll durch die Lösung nur ein möglichst geringer Lichtverlust eingeführt werden.

Diese Aufgabe wird erfindungsgemäß gelöst von einer Beleuchtungseinrichtung für einen Bildschirm gemäß Anspruch 1, die in mindestens zwei Betriebsarten B1 für einen freien Sichtmodus und B2 für einen eingeschränkten Sichtmodus betrieben werden kann, wobei die Beleuchtungseinrichtung eine flächenartig ausgedehnte Hintergrundbeleuchtung, die Licht in einen eingeschränkten Winkelbereich abstrahlt, umfasst. Als eingeschränkter Winkelbereich kann grundsätzlich jeder Bereich in Frage kommen, der kleiner als der Halbraum vor der Hintergrundbeleuchtung ist; bevorzugt ist hier aber z.B. ein Winkelbereich von +/-20 oder 30 Grad horizontal und/oder vertikal oder als Konus um die Flächennormale bzw. einen wählbaren Richtungsvektor auf der Hintergrundbeleuchtung gemeint; kleine Lichtmengen von weniger als 1% bis 5% Maximal-Helligkeit können bei der Definition des eingeschränkten Winkelbereichs außer Betracht bleiben. Die Begriffe "vertikal" und "horizontal" beziehen sich dabei zunächst allgemein auf zwei senkrecht zueinander liegende Vorzugsrichtungen auf der Fläche der Hintergrundbeleuchtung oder einer Großfläche eines Lichtleiters, die im Betrieb je nach Orientierung des mit der Beleuchtungseinrichtung verwendeten, in der Regel fixierten Bildschirms, einer tatsächlich in Bezug auf die Position eines Betrachters und damit der Erdoberfläche horizontalen oder vertikalen Richtung entsprechen.

Die Beleuchtungsrichtung umfasst außerdem einen in Betrachtungsrichtung vor der Hintergrundbeleuchtung gelegenen, plattenförmigen Lichtleiter mit mindestens vier Schmalseiten und zwei Großflächen, welcher auf mindestens einer der Großflächen und / oder innerhalb seines Volumens Auskoppelelemente aufweist, wobei der Lichtleiter für das von der Hintergrundbeleuchtung ausgehende Licht zu mindestens 70% transparent ist, sowie seitlich an Schmalseiten des Lichtleiters angeordnete Leuchtmittel, bevorzugt an einer oder beiden Langseiten des Lichtleiters.

Die Auskoppelelemente sind dabei in ihrer Anzahl pro Fläche und in ihrer Ausdehnung derart gewählt sind, dass der Lichtleiter auf mindestens 50%, bevorzugt 80% seiner Fläche einen durchschnittlichen Haze-Wert kleiner als 7% aufweist, bevorzugt kleiner als 2%, besonders bevorzugt kleiner als 1%, gemessen gemäß ASTM D1003 - wobei hier die Messung gemäß der gebräuchlicheren Prozedur A mit einem Hazemeter als Referenz zugrunde gelegt wird -, wodurch das von der Hintergrundbeleuchtung mindestens in der Betriebsart B2 in einen eingeschränkten Winkelbereich abgestrahlte Licht beim Durchgang durch den Lichtleiter höchstens geringfügig außerhalb des besagten Winkelbereichs gestreut wird. Unter "geringfügig" ist beispielsweise zu verstehen, dass - aufgrund des geringen Haze - in einem Winkel von beispielsweise horizontal 40° von der Flächennormalen maximal 1% der Leuchtdichte durch Streuung hinzukommt, die die Beleuchtungseinrichtung in einem Winkel von 0° abstrahlt.

Die Auskoppelelemente können bei der Herstellung des Lichtleiters entsprechend anpassbarer und vorgebbarer Bedingungen für die Auskopplung des Lichts grundsätzlich auf verschiedene Weise in oder auf dem Lichtleiter verteilt werden. Bei den Auskoppelelementen handelt es sich um lokal begrenzte Strukturänderungen im Volumen oder/und auf den Oberflächen des Lichtleiters. Ausdrücklich nicht unter den Begriff des Auskoppelelements fallen daher zusätzliche optische Schichten, die auf den Flächen des Lichtleiters angebracht werden, d.h. z.B. Diffusionsschichten, Reflexionsschichten oder (duale) helligkeitsverstärkende oder auch polarisationsrecycelnde Schichten (*(dual) brightness enhancement film* - *(D)BEF*). Diese, nicht unter den Begriff des "Auskoppelelements" fallenden zusätzlichen Schichten werden mit dem Lichtleiter nur an den Ränder verbunden, liegen im Bereich der Großflächen jedoch nur lose auf und bilden mit dem Lichtleiter keine physische Einheit. Hingegen bilden auf die Großflächen aufgebrachte Lacke, die sich mit dem Lichtleiter durch chemische Reaktionen verbinden, eine physische Einheit, sind nicht mehr voneinander zu trennen; solche Lacke zählen daher nicht als zusätzliche Schicht im oben genannten Sinne.

Die Struktur der Auskoppelelemente kann vorgegeben werden, so dass die Wirkung eines jeden Auskoppelelements zumindest näherungsweise bekannt ist und Eigenschaften des Lichtleiters bzw. des aus dem Lichtleiter tretenden Lichts gezielt durch eine vorgebbare Verteilung der Auskoppelelemente festgelegt werden können.

Erfindungsgemäß wird eine Verteilung der Auskoppelelemente auf mindestens einer der Großflächen und / oder innerhalb des Volumens des Lichtleiters so vorgegeben, dass von den Leuchtmitteln in den Lichtleiter eingestrahltes und von den Auskoppelelementen aus dem Lichtleiter ausgekoppeltes Licht die folgenden Bedingungen erfüllt:
- mindestens 30% der auf einer der Großflächen zwischen einem Winkelbereich von -50° und +50° ausgekoppelten Lichtmenge wird zwischen einem Winkelbereich von -20° und +20° bezogen auf eine oder zwei vorgegebene, zueinander und zur Flächennormalen senkrechte Vorzugsrichtungen abgestrahlt, und / oder mindestens 40% der auf einer der Großflächen zwischen einem Winkelbereich von -50° und +50° zur Flächennormalen der Großfläche ausgekoppelten Lichtmenge wird zwischen einem Winkelbereich von -30° und +30° bezogen auf die eine oder zwei Vorzugsrichtungen abgestrahlt, und
- mindestens 50%, bevorzugt mindestens 60%, besonders bevorzugt mindestens 80% der aus dem Lichtleiter (3) ausgekoppelten Lichtmenge werden in Richtung von der Hintergrundbeleuchtung (2) weg ausgekoppelt.

Die beiden Betriebsarten B1 und B2 unterscheiden sich schließlich dadurch, dass in der Betriebsart B2 die Hintergrundbeleuchtung ein- und die Leuchtmittel (an den Schmalseiten des Lichtleiters) ausgeschaltet sind, und wobei in der Betriebsart B1 mindestens die Leuchtmittel (an den Schmalseiten des Lichtleiters) eingeschaltet sind. Dabei wird nur Licht berücksichtigt, was ursprünglich von den Leuchtmitteln in den Lichtleiter eingestrahlt und von diesem anschließend wieder über die Auskoppelelemente abgestrahlt wurde, wobei die Abstrahlung nahezu ausschließlich über die Auskoppelemente erfolgt.

Die Vorzugsrichtungen können dabei den oben genannten vertikalen bzw. horizontalen Richtungen in einem äußeren Bezugssystem entsprechen.

In der Betriebsart B1 sind wie vorstehend beschrieben mindestens die Leuchtmittel an den Schmalseiten des Lichtleiters eingeschaltet. Es ist dabei möglich, dass die Hintergrundbeleuchtung ein- oder ausgeschaltet ist.

Die geforderten, für die Erfindung wesentlichen Eigenschaften für die Auskoppelelemente hinsichtlich ihrer Anzahl pro Flächeneinheit, ihrer Form und Ausdehnung in drei Dimensionen sowie ihrer Verteilung auf mindestens einer der Großflächen und / oder innerhalb des Volumens des Lichtleiters können beispielsweise mit einer Optik-Simulationssoftware wie etwa "VirtuaILab" der Firma LightTrans oder anderer Anbieter bestimmt und dann entsprechend physisch umgesetzt werden.

Die vorangehend beschriebene Abstrahlcharakteristik wird im Stand der Technik ohne zusätzliche Schichten wie etwa Reflektoren, BEF, DBEF, Prismenfolien oder Diffusoren nicht erreicht. Die besondere Abstrahlcharakteristik dient hier insbesondere der Erzielung einer hinreichenden Effizienz der Lichtausbeute, weil ein mit der erfindungsgemäßen Beleuchtungseinrichtung ausgestatteter Bildschirm typischerweise nur in einem engen vertikalen Winkelbereich - meist nur -20° bis +20° bzw. -30° bis +30° - betrachtet wird. Dabei muss darauf geachtet werden, dass gleichzeitig auch die erfindungswesentlichen kleinen Haze-Werte erreicht werden, um die Betriebsart B2 in ihrer Sichtschutzwirkung nicht zu beeinträchtigen.

Es ist möglich, dass Auskoppelelemente auf beiden Großflächen und zusätzlich optional im Volumen angebracht sind.

Der Lichtleiter besteht vorzugsweise aus einem transparenten, thermoplastischen oder thermoelastischen Kunststoff oder aus Glas.

Vorteilhaft ist die Verteilung der Auskoppelelemente auf mindestens einer der Großflächen und / oder innerhalb des Volumens des Lichtleiters so vorgegeben, dass das ausgekoppelte Licht auf mindestens 70% der Fläche des Lichtleiters eine Leuchtdichtehomogenität von 70% erreicht. Die Leuchtdichtehomogenität kann hierzu als Lv^{min}/Lv^{max} definiert werden, also als Verhältnis des kleinsten Wertes der Leuchtdichte zum größten Wert pro Flächeneinheit. Eine andere anwendbare Vorschrift zur Definition der Leuchtdichtehomogenität ist in dem "*Uniformity Measurement Standard for Displays V1.2"* vom Deutschen Flachdisplay-Forum definiert.

Ferner ist es für einige Anwendungen vorteilhaft, dass der besagte eingeschränkte Winkelbereich asymmetrisch um die Flächennormale der Hintergrundbeleuchtung ausgebildet ist. Die asymmetrische Ausbildung erfolgt bevorzugt in einer der Vorzugsrichtungen. Dies ist insbesondere bei Anwendungen im Fahrzeug hilfreich, etwa wenn ein mit der erfindungsgemäßen Beleuchtungseinrichtung zu kombinierender Bildschirm als sogenanntes Center-Information-Display im Armaturenbrett etwa in der Mitte zwischen Fahrer und Beifahrer angeordnet ist. Dann muss der in der Betriebsart B2 ausschließlich für den Beifahrer freigegebene, eingeschränkte Winkelbereich für die Sicht asymmetrisch gestaltet, also auf den Beifahrer gerichtet, sein. Die Vorzugsrichtung, in welcher die Asymmetrie ausgebildet ist, entspricht hier der Horizontalen.

Die Auskoppelelemente weisen maximale Abmessungen von 100µm, bevorzugt zwischen 1 µm und 30 µm, auf.

Die Auskoppelelemente zur Auskopplung von Licht an mindestens einer der Großflächen des Lichtleiters bestehen bevorzugt aus Mikrolinsen und / oder Mikroprismen und / oder diffraktiven Strukturen und / oder dreidimensionalen Strukturelementen und / oder Streuelementen mit einer maximalen Ausdehnung in ihrer größten Dimension, die kleiner als 35 Mikrometer, bevorzugt kleiner als 15 Mikrometer, ist. Im Falle von diffraktiven Strukturen kann es sich beispielsweise um ein Hologramm bzw. ein Gitter/Beugungsgitter handeln.

Die Auskoppelemente selbst können aber auch allein die äußere Form von Mikrolinsen, Mikroprismen, Streuelementen und / oder diffraktiven Strukturen aufweisen. Sie können dann insbesondere als Hohlräume ausgestaltet werden, die dann im Volumen des Lichtleiters ausgebildet sind. Die Hohlräume können luftleer sein, sind aber bevorzugt mit einem gasförmigen, flüssigem oder festem Material ausgefüllt, Das Material weist einen Brechungsindex auf, der von dem des für den Lichtleiter verwendeten Materials abweicht; bevorzugt ist er geringer. Durch die Befüllung mit Material und durch die Materialwahl kann man Einfluss auf die Lichtleitung bzw. -auskopplung nehmen. Alternativ oder ergänzend weicht auch der Haze-Wert des Materials bevorzugt von demjenigen des für den Lichtleiter verwendeten Materials ab, ist bevorzugt höher. Vorteile dieser Ausgestaltungen sind höhere Effizienz bei der Lichtauskopplung.

Alternativ und technisch einfacher können die Hohlräume auch gebildet werden, wenn man den Lichtleiter aus zwei miteinander verbundenen Substratschichten bildet, die Substratschichten sind bevorzugt gleichartig. Die Verbindung kann chemisch beispielsweise durch Kleben erfolgen. Die Hohlräume sind dann als Materialaussparungen an mindestens einer der Grenzflächen der Substratschichten ausgebildet.

Wenn die Auskoppelelemente auf mindestens einer der Großflächen des Lichtleiters angebracht sind, so werden diese vorteilhaft aus einem mit einem Werkzeug strukturierten Kunststoff oder Glas gebildet, dessen Struktur vermittels eines Werkzeuges eingeprägt wurde. Dies ist z.B. in Massenproduktion möglich, indem auf ein Lichtleitersubstrat ein UV-härtendes Material - z.B. ein Lack, ein Monomer etc. - aufgebracht wird, welches vermittels eines Werkzeuges strukturiert und durch UV-Strahlung ausgehärtet, z.B. polymerisiert wird. Andere durch Strahlung härtende Materialien können ebenfalls eingesetzt werden. Die Ausbildung der Aussparungen zur Realisierung der Auskoppelelemente lässt sich beispielsweise mechanisch, lithographisch oder drucktechnisch realisieren, oder aber auch materialauftragend, -umwandelnd, -abtragend oder -auflösend.

Damit können z.B. Gitterstrukturen, Mikroprismen - entweder konvex mit Kunststoffanteil auf der Oberfläche nach außen zeigend, und / oder konkav als Einprägung bzw. Aussparung innerhalb der Oberflächenschicht des strukturierten Kunststoffs -, sonstige dreidimensionale Strukturelemente mit anderen Formen, oder auch Mikrolinsen kostengünstig und mit Massenfertigungstauglichkeit umgesetzt werden. Konkav ausgebildete und konvex ausgebildete Strukturen können gleichermaßen zum Einsatz kommen.

Schließlich kann der Lichtleiter bzw. sein Substrat mindestens 40 Gewichtsprozent Polymethylmethacrylat, bevorzugt mindestens 60 Gewichtsprozent Polymethylmethacrylat, bezogen auf sein Gewicht, umfassen. Alternativ kann es sich beispielsweise um Polycarbonat (PC) handeln.

Die Hintergrundbeleuchtung besteht beispielsweise aus einem flächigen Strahler, vorzugsweise einem weiteren Lichtleiter mit seitlich oder auf der Rückseite angeordneten weiteren Leuchtmitteln, sowie mindestens einem in den flächigen Strahler integrierten und / oder davor angeordneten Lichtkollimator, wie etwa mindestens einer Prismenfolie und / oder mindestens einem Privacyfilter (Lamellenfilter).

Entsprechend kann also die Hintergrundbeleuchtung grundsätzlich aufgebaut sein wie ein LED-Backlight, beispielsweise als sogenanntes Side-light, Edgelight, Direct LED Backlight, edge LED Backlight, OLED oder als ein anderer Flächenstrahler, auf welchen z.B. mindestens ein permanenter Privacy-Filter (mit Mikrolamellen) aufgebracht ist. Andere Varianten sehen den Einsatz von sogenannten "Directed Backlights", also gerichteten Hintergrundbeleuchtungen, vor.

Die Erfindung sieht vor, dass für die Betriebsart B1 in Abhängigkeit von vorgegebenen Grenzwinkeln σ, γ das ausgekoppelte Licht, welches aus dem Lichtleiter in einem Winkel β austritt, an jedem Punkt der Oberfläche des Lichtleiters in Winkelbereichen, die den Bedingungen 80° > β > γ und / oder-80° < β < -σ, mit 10° < γ < 80° und 10° < σ < 80° genügen, bevorzugt γ = σ = 40°, gemessen senkrecht zur Oberfläche des Lichtleiters und in mindestens einer der beiden Vorzugsrichtungen maximal 80%, bevorzugt 60% besonders bevorzugt maximal 50% von der Lichtstärke aufweist, die das Licht aufweist, welches von einem solchen Punkt der Oberfläche des Lichtleiters entlang der Normalen der Oberfläche austritt. Die Vorzugsrichtung ist dabei oft die vertikale Orientierung. Ein negativer Winkel wird dabei o.B.d.A. (ohne Beschränkung der Allgemeinheit) derjenigen Seite zugeordnet, auf der das Licht eingekoppelt wird, ein Winkel von -90° entspricht also einer Richtung, aus der eingekoppelt wird. Die Grenzwinkel σ, γ werden dabei fest vorgegeben, und zwar anhand der für die jeweilige Anwendung gewünschten optischen Leistung. Im Falle der besonders bevorzugten Grenzwinkel γ = σ = 40° gilt die Lichtstärkebedingung dann nur für Winkel zwischen -40° und -80° sowie 40° und 80°. Je kleiner die Grenzwinkel σ, γ jeweils sind, umso mehr wird das Licht in der bzw. den entsprechenden Vorzugsrichtungen zur Mittelsenkrechten konzentriert. Beispielsweise können im PKW, wo Fahrer und Beifahrer in der Betriebsart B1 in relativ gut zu definierenden Betrachtungswinkeln auf einen Bildschirm mit der erfindungsgemäßen Beleuchtungseinrichtung schauen, die Grenzwinkel σ, γ eher kleiner als 40° gewählt werden. Demgegenüber können in einem Laptop aufgrund der Klappbarkeit des Bildschirms und des universalen Einsatzszenarios hinsichtlich der Betrachtungswinkel verschiedener Personen Werte um 40° oder größer sinnvoll sein. Die 80°-Grenze kann unter Umständen auch 70° betragen.

Dadurch wird z.B. eine Verminderung von störenden Reflektionen in der Windschutzscheibe, vor allem bei Nachtfahrten, erzielt, wenn die erfindungsgemäße Beleuchtungseinrichtung mit einem Bildschirm in einem Fahrzeug eingebaut ist. Fernerhin wird bei Einhalten der vorgenannten Bedingung eine deutliche Auskopplungseffizienz aus dem Lichtleiter erzielt, ganz ohne den Einsatz von fokussierenden Schichten wie etwa Prismenfolien.

Besonders vorteilhaft ist die Anwendung der erfindungsgemäßen Beleuchtungseinrichtung mit einem Bildschirm, der somit in mindestens zwei Betriebsarten B1 für einen freien Sichtmodus und B2 für einen eingeschränkten Sichtmodus betrieben werden kann, umfassend
- eine erfindungsgemäße Beleuchtungsanordnung, sowie
- einen in Betrachtungsrichtung vor dem Lichtleiter angeordneten transmissiven Bildgeber.

Ferner ist es für die Erfindung von Vorteil, wenn ein Bildgeber verwendet wird, der aus Pixeln zusammengesetzt ist, die wiederum aus Subpixeln bestehen, und jede Abmessung der besagten Auskoppelelemente in Höhe, Tiefe und Breite kleiner ist als das Minimum aus Breite und Höhe der Subpixel eines verwendeten Bildgebers, d.h. kleiner als das Minimum dieser beiden Werte. Bevorzugt ist jede Abmessung der besagten Auskoppelelemente in Höhe, Tiefe und Breite sogar um einen Faktor 1,3; 1,5 oder 2,0 kleiner als das Minimum aus Breite und Höhe der Subpixel eines verwendeten Bildgebers. Das Bild wird auf diese Weise homogener und es lassen sich Überlagerungserscheinungen von Strukturmuster und Subpixelmuster u.U. vermeiden.

Eine weitere sinnvolle Ausgestaltung des erfindungsgemäßen Bildschirms besteht darin, dass in Betrachtungsrichtung vor dem Bildgeber ein weiterer Lichtleiter (z.B. aus Glas oder Kunststoff) mit Mitteln zur Auskopplung von Licht angeordnet ist, der seitlich von Leuchtmitteln mit Licht gespeist werden kann. Die hier eingesetzten Mittel zur Auskopplung sind beispielsweise die weiter oben beschriebenen, oder aber solche wie im Stand der Technik bekannt, etwa Nanopartikel wie Titandioxid, Bariumsulfat etc. in geeigneten Größen und Mengen - wie beispielsweise in der WO 2015/121398 A1 und der WO 2017/089482 A1 beschrieben -, die im Volumen des Lichtleiters homogen verteilt sind. Vermittels dieser Ausgestaltung kann ein eventuell noch unbeabsichtigt vorhandenes Restlicht in der Betriebsart B2 in die eigentlich vor Blicken geschützten Winkelbereiche noch derart überlagert bzw. überstrahlt werden, dass kein Kontrast mehr wahrnehmbar ist und somit keinerlei Bildwahrnehmung aus den nicht freigegebenen Winkeln mehr möglich ist. Die Auskoppelelemente können auch hier in Form von Hohlräumen oder an Grenzflächen ausgebildet sein, die bei einer Verwendung in einem Fahrzeug beispielsweise dafür sorgen, dass nur der Beifahrer Informationen dargestellt bekommt, der Fahrer jedoch nicht, indem die Abstrahlung auf den entsprechenden Teilraum begrenzt wird.

Die entsprechenden Leuchtmittel sind zur Abstrahlung farbigen oder weißen Lichts ausgebildet. Dabei können die Leuchtmittel Licht in einer Farbe abstrahlen, welche im von dem transmissiven Bildgeber dargestellten Bild nicht vorkommt.

Alternativ ist es möglich, dass die Leuchtmittel Licht in einer Farbe abstrahlen, welche im von dem transmissiven Bildgeber dargestellten Bild vorkommt bzw. im Farbspektrum nahe an einer solchen Farbe liegt. Schließlich ist es denkbar, dass die Leuchtmittel Licht in einer Farbe abstrahlen, die in etwa der Komplementärfarbe einer Farbe, welche im von dem transmissiven Bildgeber dargestellten Bild vorkommt, entspricht.

Mit "farbigem Licht" ist insbesondere sichtbares Licht gemeint, welches nicht weiß ist, also z.B. Licht in den Farben rot, grün, blau, türkis, cyan, magenta oder gelb. Ferner kann dieses Licht wahlweise in verschiedenen Helligkeitsstufen abgestrahlt werden. Außerdem ist es möglich, dass die Farbigkeit des von den Leuchtmitteln ausgehenden Lichtes auch zeitlich moduliert wird, etwa in Farbe und / oder Helligkeit. Darüber hinaus können die Leuchtmittel auch mit verschiedenen einzelnen Leuchtmitteln umgesetzt werden, etwa RGB-LEDs in LED-Zeilen, die gleichzeitig oder zeitlich versetzt und / oder räumlich versetzt jeweils Licht unterschiedlicher Farben und / oder unterschiedlicher Helligkeit abstrahlen.

Auf der Oberseite des Bildgebers und / oder auf mindestens einer der Großflächen des Lichtleiters wie auch auf mindestens einem der Privacyfilter, wenn vorhanden, können Mittel zur Reflexminderung oder -steuerung, beispielsweise eine Antiglare- und / oder eine Antireflexbeschichtung, angeordnet sein.

Besonders vorteilhaft findet der erfindungsgemäße Bildschirm Verwendung in einem Fahrzeug zur wahlweisen Darstellung von Bildinhalten lediglich für den Beifahrer in der Betriebsart B2 bzw. gleichzeitig für den Fahrer und den Beifahrer in der Betriebsart B1. Ersteres ist z.B. hilfreich, wenn der Beifahrer sich Unterhaltungsinhalte anschaut, die den Fahrer ablenken könnten.

Ein erfindungsgemäßer Bildschirm kann gleichsam verwendet werden zur Eingabe oder Anzeige von vertraulichen Daten, beispielweise von PIN-Geheimnummern, E-Mails, SMS oder Passwörtern, an Geldautomaten, Zahlungsterminals oder mobilen Geräten.

In allen vorgenannten Ausgestaltungen können die besagten Leuchtmittel LEDs bzw. LED-Zeilen oder Laserdioden sein. Andere Varianten sind denkbar und liegen im Rahmen der Erfindung.

Weiterhin können die gewünschten eingeschränkten Winkelbereiche für den Modus B2 für eine eingeschränkte Sicht jeweils für die horizontale und vertikale Richtung unabhängig voneinander definiert und umgesetzt werden. Beispielsweise könnte in der vertikalen Richtung ein größerer Winkel (oder ggf. gar keine Einschränkung) sinnvoll sein, als in der horizontalen Richtung, etwa wenn bei Geldautomaten Personen mit unterschiedlicher Größe ein Bild sehen sollen, während der Seiteneinblick stark oder komplett eingeschränkt bleiben soll. Für POS-Zahlterminals sind hingegen auf Grund von Sicherheitsbestimmungen oftmals Sichteinschränkungen im Modus B2 sowohl in horizontaler als in vertikaler Richtung notwendig.

Grundsätzlich bleibt die Leistungsfähigkeit der Erfindung erhalten, wenn die vorbeschriebenen Parameter in bestimmten Grenzen variiert werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Die Erfindung wird im Folgenden an Hand von Zeichnungen, die auch erfindungswesentliche Merkmale zeigen, näher erläutert. Es zeigt
- Fig. 1: eine Prinzipskizze zur Auskopplung von Licht, das seitlich in einen Lichtleiter eingekoppelt wird, aus der unteren Großfläche des Lichtleiters, auf welcher sich die Auskoppelemente befinden, wobei das Licht an der oberen Großfläche den Lichtleiter verlässt,
- Fig. 2: eine Prinzipskizze zur Auskopplung von Licht, das seitlich in einen Lichtleiter eingekoppelt wird, aus der oberen Großfläche des Lichtleiters, auf welcher sich die Auskoppelemente befinden, wobei das Licht an der oberen Großfläche den Lichtleiter verlässt,
- Fig. 3: eine Prinzipskizze zum Durchgang von Licht, das aus einer Hintergrundbeleuchtung herrührt, durch einen Lichtleiter,

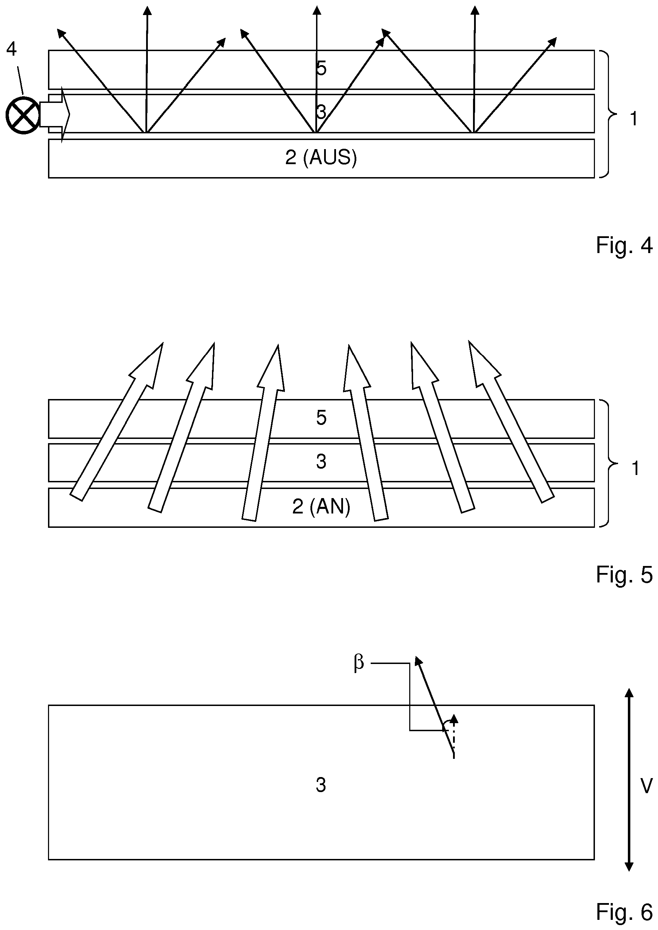

- Fig. 4: eine Prinzipskizze der erfindungsgemäßen Beleuchtungseinrichtung im Zusammenspiel mit einem Bildgeber im Modus B1 für einen freien Sichtmodus,
- Fig. 5: eine Prinzipskizze der erfindungsgemäßen Beleuchtungseinrichtung im Zusammenspiel mit einem Bildgeber im Modus B2 für einen eingeschränkten Sichtmodus,
- Fig. 6: eine schematische Darstellung zur Definition der vertikalen Richtung des zu messenden Winkels β,

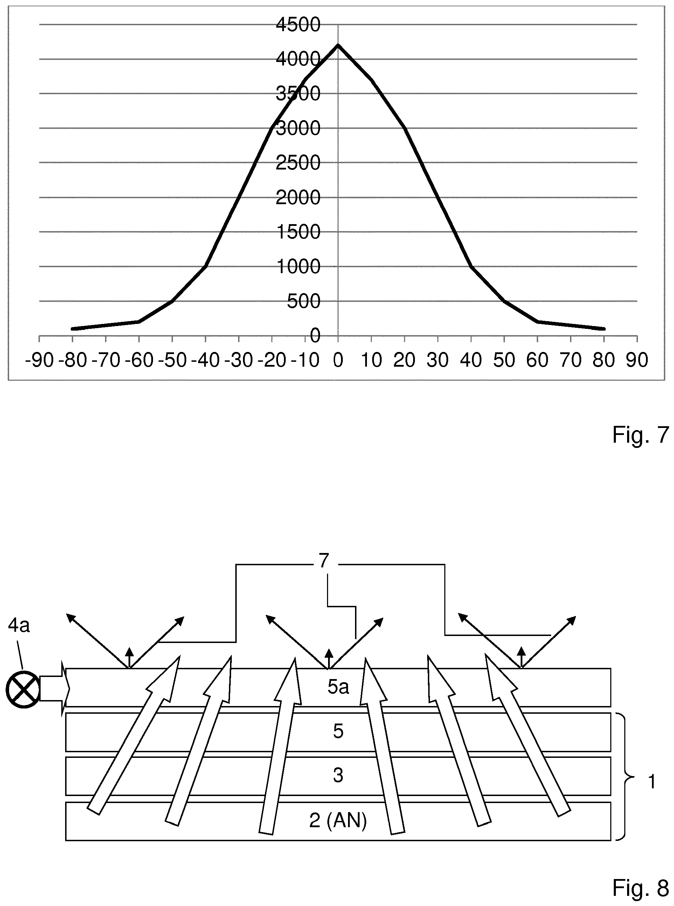

- Fig. 7: ein Diagramm zur relativen Helligkeit des aus dem Lichtleiter ausgekoppelten Lichtes, gemessen in vertikaler Richtung,
- Fig. 8: eine Ausgestaltung der erfindungsgemäßen Beleuchtungseinrichtung im Zusammenspiel mit einem Bildgeber, bei welcher in Betrachtungsrichtung vor dem Bildgeber ein weiterer Lichtleiter mit Mitteln zur Auskopplung von Licht angeordnet ist, der seitlich von Leuchtmitteln mit Licht gespeist werden kann, sowie

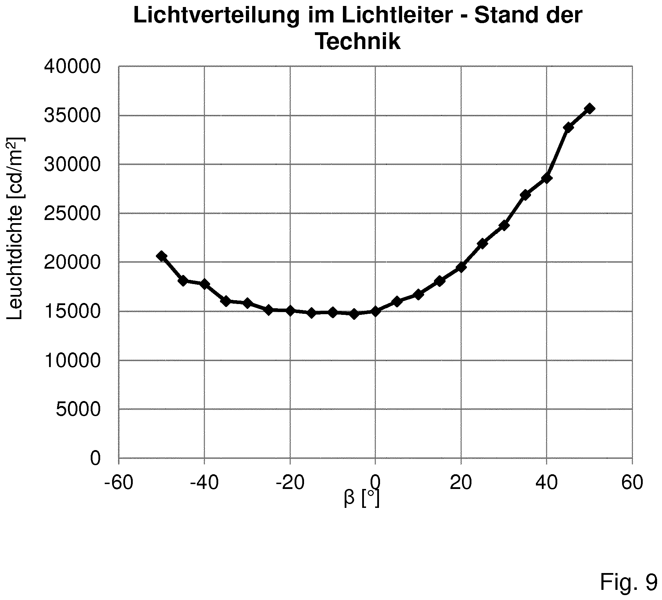

- Fig.9: die vertikale Helligkeitsverteilung über einen Winkelbereich für einen Lichtleiter im Stand der Technik.

Die Zeichnungen sind nicht maßstabsgetreu und geben lediglich Prinzipdarstellungen wieder.

### Ausführliche Beschreibung der Zeichnungen

In Fig. 1 ist eine Prinzipskizze zur Auskopplung von Licht, das seitlich von Leuchtmitteln 4 in einen Lichtleiter 3 eingekoppelt wird, auf der unteren Großfläche des Lichtleiters 3, auf welcher sich die Auskoppelemente 6 befinden, dargestellt. Das ausgekoppelte Licht verlässt den Lichtleiter 3 jedoch aus der oberen Großfläche. In der horizontalen Richtung wird hier das Licht in einen großen Winkel aus der oberen Großfläche des Lichtleiters 3 ausgekoppelt. Der Ort der Auskoppelelemente 6 ist durch die Zahl 6 angedeutet, jedoch sind die eigentlichen Auskoppelelemente 6 hier nicht eingezeichnet, weil sie mikroskopisch klein sein müssen. Es wird also Licht von den Leuchtmitteln 4, z.B. von LEDs, seitlich in den Lichtleiter 3 eingekoppelt. Auf Grund von Totalreflexion werden Strahlen des eingekoppelten Lichts (fett gezeichnete Strahlen) an der Außenwand wieder zurück in den Lichtleiter 3 geworfen, bis sie schließlich (ggf. zum wiederholten Mal) auf ein Auskoppelelement 6 zur gewünschten Auskopplung treffen. Die Auskopplung ist durch die dünnen Strahlen stilisiert. Die Darstellung in Fig. 1 ist zur besseren Erkennbarkeit stark stilisiert; in der Realität wird eine sehr große Vielzahl an Strahlengängen im Lichtleiter 3 umgesetzt.

Fig. 2 zeigt eine Prinzipskizze zur Auskopplung von Licht, das seitlich von Leuchtmitteln 4 in einen Lichtleiter 3 eingekoppelt wird, aus der oberen Großfläche des Lichtleiters 3, auf welcher sich die Auskoppelemente 6 befinden. Das Licht verlässt den Lichtleiter 3 hier auch durch die obere Großfläche. Es gelten hier sinngemäß die Ausführungen zu Fig. 1.

Technisch verschieden ist hier lediglich die Lage und ggf. die Ausgestaltung der Auskoppelelemente 6, die nun auf der Oberseite des Lichtleiters 3 liegen und somit das Licht direkt nach oben auskoppeln, ohne dass es zum Verlassen des Lichtleiters 3, wie demgegenüber in Fig. 1 gezeigt, erst den Lichtleiter 3 noch einmal quer passieren müsste.

Fig. 3 zeigt eine Prinzipskizze zum Durchgang von Licht, das aus einer Hintergrundbeleuchtung 2 herrührt, durch einen Lichtleiter 3, und zwar durch die beiden Großflächen des Lichtleiters 3 bzw. quer durch dessen Volumen. Die Auskoppelemente 6 spielen dabei eine im Wesentlichen vernachlässigbare Rolle, da das Licht aus der Hintergrundbeleuchtung 2 herrührt, d.h. nicht seitlich durch eine Schmalseite von Leuchtmitteln 4 in den Lichtleiter 3 eingekoppelt wird und daher nicht bzw. kaum durch Totalreflexion im Lichtleiter 3 hin und her gelenkt wird. Insofern sind die Auskoppelemente 6 hier gar nicht mit eingezeichnet, weil deren Wirkung in dieser Konstellation vernachlässigbar ist.

In Fig. 4 ist eine Prinzipskizze einer Beleuchtungseinrichtung mit einem Bildgeber 5 (zusammengefasst im Folgenden mit dem Begriff des betrachteten "Bildschirms 1") in der Betriebsart B1 für einen freien Sichtmodus dargestellt.

Dieser Bildschirm 1 umfasst
- eine flächenartig ausgedehnte Hintergrundbeleuchtung 2, die Licht in einen eingeschränkten Winkelbereich abstrahlt, als eingeschränkter Winkelbereich ist hier z.B. ein Winkelbereich von +/-30 Grad nach links und rechts zur Flächennormale der Hintergrundbeleuchtung 2 gemeint; kleine Lichtmengen von weniger als 3 bis 5% Maximal-Helligkeit können ggf. bei der Definition des eingeschränkten Winkelbereichs außer Betracht bleiben;
- einen in Betrachtungsrichtung vor der Hintergrundbeleuchtung 2 angeordneten transmissiven Bildgeber 5,
- einen zwischen dem Bildgeber 5 und der Hintergrundbeleuchtung 2 gelegenen, plattenförmigen Lichtleiter 3, welcher auf mindestens einer der Großflächen und / oder innerhalb seines Volumens Auskoppelelemente 6 aufweist, wobei der Lichtleiter 3 für das von der Hintergrundbeleuchtung 2 ausgehende Licht zu mindestens 70% transparent ist,
- seitlich an Schmalseiten des Lichtleiters 3 angeordnete Leuchtmittel 4, welche bevorzugt an einer oder beiden Langseiten des Lichtleiters 3 angeordnet sind, bei einer horizontalen Ausrichtung (Landscape-Modus) also oben und unten,
- wobei die - zeichnerisch nicht dargestellten - Auskoppelelemente 6 in ihrer Anzahl pro Fläche und in ihrer Ausdehnung derart gewählt sind, dass der Lichtleiter 3 auf mindestens 50% seiner Fläche einen durchschnittlichen Haze-Wert kleiner als 7% aufweist, bevorzugt kleiner als 2%, besonders bevorzugt kleiner als 1%, gemessen gemäß ASTM D1003 Prozedur A mit einem Hazemeter, wodurch das von der Hintergrundbeleuchtung 2 mindestens in der Betriebsart B2 in einen eingeschränkten Winkelbereich abgestrahlte Licht beim Durchgang durch den Lichtleiter 3 höchstens geringfügig außerhalb des besagten Winkelbereichs gestreut wird,
- wobei ferner eine Verteilung der Auskoppelelemente 6 auf mindestens einer der Großflächen und / oder innerhalb des Volumens des Lichtleiters 3 so vorgegeben ist, dass von den Leichtmitteln 4 in den Lichtleiter 3 eingestrahltes und von den Auskoppelementen 6 aus dem Lichtleiter 3 ausgekoppeltes Licht die folgenden Bedingungen erfüllt - ohne dass dabei zusätzliche optische Schichten wie Diffusoren, Reflektoren etc. verwendet werden:
   - mindestens 30% der auf einer der Großflächen zwischen einem Winkelbereich von -50° und +50° zur Flächennormalen der Großfläche ausgekoppelten Lichtmenge wird zwischen einem Winkelbereich von -20° und +20° bezogen auf eine oder zwei vorgegebene, zueinander und zur Flächennormalen senkrechte Vorzugsrichtungen abgestrahlt, und / oder mindestens 40% der auf einer der Großflächen zwischen einem Winkelbereich von -50° und +50° ausgekoppelten Lichtmenge wird zwischen einem Winkelbereich von -30° und +30° bezogen auf die eine oder zwei Vorzugsrichtungen abgestrahlt, und
   - mindestens 50%, bevorzugt mindestens 60%, besonders bevorzugt mindestens 80% der aus dem Lichtleiter 3 ausgekoppelten Lichtmenge werden in Richtung von der Hintergrundbeleuchtung 2 weg ausgekoppelt,
- wobei in der Betriebsart B1 mindestens die Leuchtmittel 4 eingeschaltet sind.

Die Vorzugsrichtungen liegen dabei senkrecht zueinander in einer Ebene auf dem Lichtleiter 3 bzw. auf der Fläche der Hintergrundbeleuchtung 2. Im Betrieb, beispielsweise in einem Zahlterminal oder in einem Auto, ist der Bildschirm dann relativ zu seiner äußeren Umgebung fixiert und den Vorzugsrichtungen lassen sich beispielsweise die Begriffe "vertikal" und "horizontal" - unabhängig von einer "Portrait"- oder "Landscape"-Orientierung des Bildschirms - zuordnen, die sich eigentlich auf das äußere Koordinatensystem der Umgebung beziehen. "Vertikal" korrespondiert zu der Richtung von oben nach unten auf dem Bildschirm und "horizontal" zur Richtung von links nach rechts.

Es ist dabei möglich, dass für die Betriebsart B1 die Hintergrundbeleuchtung 2 ein- oder ausgeschaltet ist. In Fig. 4 ist die Hintergrundbeleuchtung 2 beispielhaft ausgeschaltet. Ist ein besonders heller Modus für die Frontansicht gewünscht, dann kann in der Betriebsart B1 die Hintergrundbeleuchtung 2 gleichfalls eingeschaltet sein, was zeichnerisch nicht dargestellt ist.

Die Fig. 5 zeigt nun eine Prinzipskizze des erfindungsgemäßen Bildschirms 1 in der Betriebsart B2 für einen eingeschränkten Sichtmodus, wobei nunmehr die Hintergrundbeleuchtung 2 ein- und die Leuchtmittel 4 ausgeschaltet sind.

Das von der Hintergrundbeleuchtung 2 lediglich in einen eingeschränkten Winkel abgestrahlte Licht, in der Zeichnung Fig. 5 von den dicken Pfeilen repräsentiert, durchdringt dann im Wesentlichen ohne Streuung oder Ablenkung den Lichtleiter 3, wie auch zu Fig. 3 beschrieben, und beleuchtet anschließend den Bildgeber 5 aufgrund seiner Winkeleinschränkung derart, dass dieser im Wesentlichen nur aus einem eingeschränkten Winkelbereich wahrgenommen werden kann. Die Einschränkung des Winkelbereichs kann horizontal und / oder vertikal gelten.

Zum Merkmal, dass die Verteilung der Auskoppelelemente 6 derart auf mindestens einer der Großflächen und / oder innerhalb des Volumens des Lichtleiters 3 so vorgegeben ist, dass 50%, oder mehr der aus dem Lichtleiter 3 ausgekoppelten Lichtmenge in Richtung von der Hintergrundbeleuchtung 2 weg ausgekoppelt wird, ist Folgendes anzumerken: Im Stand der Technik, etwa bei der Nutzung von Nanopartikeln wie z.B. Titandioxid oder Polymerisat im Lichtleitervolumen, wird das Licht ungefähr zur Hälfte auf beiden Großflächen ausgekoppelt. Dies soll in der Erfindung gerade nicht umgesetzt werden, denn das Licht, was im Stand der Technik zur Hintergrundbeleuchtung 2 abgestrahlt wird, kann kaum auf den Bildgeber 5 zurückgesandt werden und geht in der Nutzungsbilanz weitestgehend verloren.

Dass die Verteilung der Auskoppelelemente 6 auf mindestens einer der Großflächen und / oder innerhalb des Volumens des Lichtleiters 3 so vorgegeben ist, dass von den Leuchtmitteln 4 in den Lichtleiter eingestrahltes und von den Auskoppelelementen 6 aus dem Lichtleiter 3 ausgekoppeltes Licht - ohne zusätzliche optische, die ausgekoppelte Lichtmenge nur ungerichtet verstärkende Schichten wie Diffusoren, Reflektoren oder helligkeitsverstärkende Filme - die Bedingungen erfüllt, dass mindestens 30% der auf einer der Großflächen zwischen einem Winkelbereich von -50° und +50° zur Flächennormalen der Großfläche ausgekoppelten Lichtmenge zwischen einem Winkelbereich von -20° und +20° bezogen auf eine oder zwei vorgegebene, zueinander und zur Flächennormalen senkrechte Vorzugsrichtungen, beispielsweise in der oben beschriebenen vertikalen oder/und der horizontalen Richtung abgestrahlt wird, und / oder mindestens 40% der auf einer der Großflächen zwischen einem Winkelbereich von -50° und +50° zur Flächennormalen der Großfläche ausgekoppelten Lichtmenge zwischen einem Winkelbereich von -30° und +30° bezogen auf die eine oder zwei Vorzugsrichtungen abgestrahlt wird, bringt gegenüber dem Stand der Technik eine enorme Effizienzsteigerung bzgl. der Lichtausbeute, denn die vorbezeichneten zusätzlichen optischen Schichten können hier in aller Regel nicht verwendet werden, weil sonst die Betriebsart B2 aufgrund von Streuung, Brechung und ggf. anderen optischen Effekten zerstört wird.

Die Auskoppelelemente 6 weisen maximale Abmessungen von 100 µm, bevorzugt zwischen 1 µm und 30 µm, auf. Typischerweise variieren die Auskoppelelemente 6 in ihrer Anzahl pro Fläche über die Oberfläche des Lichtleiters 3, um die gewünschten Auskoppeleigenschaften, wie z.B. Homogenität, zu erreichen.

Die Auskoppelelemente 6 zur Auskopplung von Licht an mindestens einer der Großflächen des Lichtleiters 3 bestehen bevorzugt aus Mikrolinsen und / oder Mikroprismen und / oder diffraktiven Strukturen und / oder dreidimensionalen Strukturelementen mit einer maximalen Ausdehnung in ihrer größten Dimension, die kleiner als 35 µm, bevorzugt kleiner als 15 µm, ist.

Wenn also die Auskoppelelemente 6 auf mindestens einer der Großflächen des Lichtleiters 3 angebracht sind, so werden diese vorteilhaft aus einem mit einem Werkzeug strukturierten Kunststoff gebildet, dessen Struktur vermittels eines Werkzeuges eingeprägt wurde. Dies ist z.B. in Massenproduktion möglich, indem auf ein Lichtleitersubstrat ein UV-härtendes Material (z.B. ein Lack, ein Monomer etc.) aufgebracht wird, welches vermittels eines Werkzeuges strukturiert und durch UV-Strahlung ausgehärtet, z.B. polymerisiert wird. Weitere Möglichkeiten der Herstellung sind beispielsweise Spritzguss, warmes Prägen und Lithographie.

Schließlich kann der Lichtleiter 3 bzw. sein Substrat mindestens 40 Gewichtsprozent Polymethylmethacrylat, bevorzugt mindestens 60 Gewichtsprozent Polymethylmethacrylat, bezogen auf sein Gewicht, umfassen. Alternativ kann es sich beispielsweise um Polycarbonat (PC) handeln.

Die Erfindung sieht vor, dass für die Betriebsart B1 in Abhängigkeit von vorgegebenen Grenzwinkeln σ, γ das ausgekoppelte Licht, welches aus dem Lichtleiter 3 in einem Winkel β austritt, an jedem Punkt der Oberfläche des Lichtleiters 3 in Winkelbereichen, die den Bedingungen 80° > β > γ und / oder -80° < β < -σ, mit 10° < γ < 80° und 10° < σ < 80° genügen, bevorzugt die Bedingung γ = σ = 40° erfüllen, gemessen senkrecht zur Oberfläche des Lichtleiters 3 und in mindestens einer der beiden Vorzugsrichtungen, beispielsweise in vertikaler Orientierung zur Oberfläche des Lichtleiters 3 (mit Orientierung ist hier die Ausrichtung des Lichtleiters 3 und damit inhärent auch des Bildgebers 5 gemeint, also insbesondere eine Portrait- oder Landscape-Orientierung), maximal 80%, bevorzugt maximal 60%, besonders bevorzugt maximal 50% von der Lichtstärke aufweist, die das Licht aufweist, welches von einem solchen Punkt der Oberfläche des Lichtleiters 3 senkrecht zu seiner Oberfläche, d.h. entlang der Flächennormalen austritt. Dadurch wird z.B. eine Verminderung von störenden Reflektionen in der Windschutzscheibe, vor allem bei Nachtfahrten, erzielt, wenn der erfindungsgemäße Bildschirm in einem Fahrzeug eingebaut ist. Die Grenzwinkel σ, γ werden anhand der für die jeweilige Anwendung gewünschte Anwendung und Verwendung der Beleuchtungseinrichtung - beispielsweise im Auto oder im Laptop - vorgegeben und festgelegt.

Diesbezüglich zeigt Fig. 6 eine schematische Darstellung zur Definition der vertikalen Richtung des zu messenden Winkels β, wobei der Lichtleiter 3 (wie auch der nicht dargestellte Bildgeber 5) im Landscape-Modus angeordnet ist, d.h. die Langseiten befinden sich oben und unten. Die Strichpunktlinie stilisiert eine senkrecht auf der Oberfläche des Lichtleiters 3 stehende Richtung, zu der in vertikaler Ausrichtung bzw. Ebene, hier durch den mit "V" beschrifteten Doppelpfeil gekennzeichnet, der Winkel β gemessen wird.

Schließlich ist in Fig. 7 ein beispielhaftes Diagramm zur relativen Helligkeit des aus dem Lichtleiter 3 ausgekoppelten Lichtes, gemessen in der Betriebsart B1 in vertikaler Richtung, dargestellt. Die Abszisse repräsentiert den Winkel β und die Ordinate eine relative Leuchtdichte, welche in Richtung vertikal jeweils unter dem entsprechenden Winkel Winkels β gemessen wurde. Klar zu erkennen ist, dass wie oben beschrieben für die Betriebsart B1 das von den Leuchtmitteln 4 herrührende und aus dem Lichtleiter 3 an dem hier gewählten Messpunkt seiner Oberfläche austretende Licht in Winkeln β >40 Grad und / oder β < -40 Grad, maximal 50% (hier ca. sogar weniger als 25%) von der Lichtstärke aufweist, die das Licht aufweist, welches von dem gewählten Punkt der Oberfläche des Lichtleiters 3 senkrecht zu seiner Oberfläche austritt.

Fig. 9 zeigt die Helligkeitsverteilung entlang einer Vorzugsrichtung - hier der vertikalen Richtung bei entsprechender Positionierung in einem übergeordneten Koordinatensystem - über einen Winkelbereich des Austrittswinkels β für einen Lichtleiter im Stand der Technik, wobei sich diese Verteilung ohne zusätzlich normalerweise sonst in einer Hintergrundbeleuchtung (Backlight) übliche Schichten wie Diffusorschichten, helligkeitsverstärkenden Filmen oder Reflektorschichten ergibt. Während diese zusätzlichen Schichten im Stand der Technik für die Anpassung der Parameter der Lichtverteilung an entsprechende Vorgaben sorgen, sind sie bei den vorangehend und folgend beschriebenen Beleuchtungseinrichtungen und Bildschirmen nicht einsetzbar, da dann ein Betrieb in der Betriebsart B2 nicht möglich wäre, denn diese Schichten zerstören durch ihre ungerichtete, statistische Abstrahlung jeden Privacy-Effekt.

Eine weitere sinnvolle Ausgestaltung des erfindungsgemäßen Bildschirm 1 besteht, wie in Fig. 8 gezeigt, darin, dass in Betrachtungsrichtung vor dem Bildgeber 5 ein weiterer Lichtleiter 5a mit Mitteln zur Auskopplung von Licht angeordnet ist, der seitlich von Leuchtmitteln 4a mit Licht gespeist werden kann. Die hier eingesetzten Mittel zur Auskopplung sind beispielsweise die weiter oben für den Lichtleiter 3 beschriebenen. Vermittels dieser Ausgestaltung kann ein eventuell noch unbeabsichtigt vorhandenes Restlicht in der Betriebsart B2 in die eigentlich vor Blicken geschützten Winkelbereiche noch derart überlagert bzw. überstrahlt werden - siehe in Fig. 8 die schmalen schrägen Pfeile 7 -, dass kein Kontrast mehr wahrnehmbar ist und somit keinerlei Bildwahrnehmung aus den nicht freigegebenen Winkeln mehr möglich ist.

Die entsprechenden Leuchtmittel 4a sind zur Abstrahlung farbigen oder weißen Lichts ausgebildet. Dabei können die Leuchtmittel 4a Licht in einer Farbe abstrahlen, welche im von dem transmissiven Bildgeber 5 dargestellten Bild nicht vorkommt.

Ferner kann dieses Licht wahlweise in verschiedenen Helligkeitsstufen abgestrahlt werden. Außerdem ist es möglich, dass die Farbigkeit des von den Leuchtmitteln 4a ausgehenden Lichtes auch zeitlich moduliert wird, etwa in Farbe und / oder Helligkeit. Darüber hinaus können die Leuchtmittel auch mit verschiedenen einzelnen Leuchtmitteln 4a umgesetzt werden, etwa RGB-LEDs in LED-Zeilen, die gleichzeitig oder zeitlich versetzt und / oder räumlich versetzt jeweils Licht unterschiedlicher Farben und / oder unterschiedlicher Helligkeit abstrahlen.

Der Lichtleiter 5a kann, insbesondere wenn er ähnliche Auskoppelelemente 6 wie für den Lichtleiter 3 beschrieben in geeigneter Weise nutzt, auch Licht nur in eine ausgewählte Richtung, beispielsweise nach links oder rechts, aber nahezu nicht bzw. vernachlässigbar senkrecht zu seiner Oberfläche auskoppeln. Dies hat den Vorteil, dass der Bildkontrast für die frontal in der Betriebsart B2 auf den Bildschirm schauenden Person nahezu oder nicht vermindert wird, während der Sichtschutzeffekt zur Seite hin wie vorstehend beschrieben deutlich verbessert wird.

Ferner ist es möglich, dass der besagte eingeschränkte Winkelbereich symmetrisch oder asymmetrisch um die Flächennormale des Bildgebers 5 ausgebildet ist. Dies ist insbesondere bei Anwendungen im Fahrzeug hilfreich, etwa wenn der Bildschirm 1 als sogenanntes Center-Information-Display im Armaturenbrett etwa in der Mitte zwischen Fahrer und Beifahrer angeordnet ist. Dann muss der in der Betriebsart B2 ausschließlich für den Beifahrer freigegebene, eingeschränkte Winkelbereich für die Sicht asymmetrisch gestaltet, also auf den Beifahrer gerichtet, sein.

Die Hintergrundbeleuchtung 2 kann beispielweise bestehen aus
- einem flächigen Strahler, vorzugsweise einem Lichtleiter mit seitlich oder auf der Rückseite angeordneten Leuchtmitteln, z.B. LEDs, sowie
- zwei im rechten Winkel gekreuzten, in den flächigen Strahler integrierte und / oder davor angeordnete Lichtkollimatoren, wie etwa "Optical Lighting Film"™ von 3M™ oder Prismenrastern, sowie mindestens einem davor angeordneten Privacyfilter, ebenfalls z.B. von 3M™.

Der Einsatz einer gerichteten Hintergrundbeleuchtung 2, also eines sogenannten "directed backlights" ist ebenso möglich.

Besonders vorteilhaft findet der erfindungsgemäße Bildschirm 1 Verwendung in einem Fahrzeug zur wahlweisen Darstellung von Bildinhalten lediglich für den Beifahrer in der Betriebsart B2 bzw. gleichzeitig für den Fahrer und den Beifahrer in der Betriebsart B1. Ersteres ist z.B. der Fall, wenn der Beifahrer sich Unterhaltungsinhalte anschaut, die den Fahrer ablenken könnten.

In allen vorgenannten Ausgestaltungen können die besagten Leuchtmittel 4 bzw. 4a LEDs bzw. LED-Zeilen oder Laserdioden sein. Andere Varianten sind denkbar und liegen im Rahmen der Erfindung.

Die vorstehend beschriebene erfindungsgemäße Beleuchtungseinrichtung und der damit umsetzbare Bildschirm lösen die gestellte Aufgabe: Es werden praktisch gut umsetzbare Lösungen erlaubt, um eine sichere Darstellung von Informationen durch einen wahlweise eingeschränkten Betrachtungswinkel zu realisieren, während in einer weiteren Betriebsart eine freie, im Betrachtungswinkel uneingeschränkte, Sicht möglich ist. Die Erfindung ist mit einfachen Mitteln preisgünstig realisierbar. In beiden Betriebsarten ist die native Auflösung der verwendeten Bildwiedergabeeinrichtung nutzbar. Außerdem wird nur ein geringer Lichtverlust durch die Lösung eingeführt.

Die vorangehend beschriebene Erfindung kann vorteilhaft überall da angewendet werden, wo vertrauliche Daten angezeigt und / oder eingegeben werden, wie etwa bei der PIN-Eingabe oder zur Datenanzeige an Geldautomaten oder Zahlungsterminals oder zur Passworteingabe oder beim Lesen von Emails auf mobilen Geräten. Die Erfindung kann -wie weiter oben beschriebenauch im PKW angewendet werden.

## Patentansprüche

1. Beleuchtungseinrichtung für einen Bildschirm (1), die in mindestens zwei Betriebsarten B1 für einen freien Sichtmodus und B2 für einen eingeschränkten Sichtmodus betrieben werden kann, umfassend
- eine flächenartig ausgedehnte Hintergrundbeleuchtung (2), die Licht in einen eingeschränkten Winkelbereich abstrahlt,
- einen in Betrachtungsrichtung vor der Hintergrundbeleuchtung (2) gelegenen, plattenförmigen Lichtleiter (3), welcher auf mindestens einer der Großflächen und / oder innerhalb seines Volumens Auskoppelelemente (6) aufweist, wobei der Lichtleiter (3) für das von der Hintergrundbeleuchtung (2) ausgehende Licht zu mindestens 70% transparent ist,
- seitlich an mindestens einer Schmalseite des Lichtleiters (3) angeordnete Leuchtmittel (4),
- wobei in der Betriebsart B2 die Hintergrundbeleuchtung (2) ein- und die Leuchtmittel (4) ausgeschaltet sind, und wobei in der Betriebsart B1 mindestens die Leuchtmittel (4) eingeschaltet sind, wobei
- eine Verteilung der Auskoppelelemente (6) auf mindestens einer der Großflächen und / oder innerhalb des Volumens des Lichtleiters (3) so vorgegeben ist, dass von den Leuchtmitteln (4) in den Lichtleiter (3) eingestrahltes und von den Auskoppelelementen (6) aus dem Lichtleiter (3) ausgekoppeltes Licht die folgenden Bedingungen erfüllt:
- mindestens 30% der auf einer der Großflächen in einem Winkelbereich von -50° bis +50° zur Flächennormalen der Großfläche ausgekoppelten Lichtmenge wird in einem Winkelbereich von -20° bis +20° zur Flächennormalen der Großfläche und bezogen auf eine oder zwei vorgegebene, zueinander und zur Flächennormalen senkrechte Vorzugsrichtungen abgestrahlt, und / oder mindestens 40% der auf einer der Großflächen in einem Winkelbereich von -50° bis +50° zur Flächennormalen der Großfläche ausgekoppelten Lichtmenge wird in einem Winkelbereich von -30° bis +30° bezogen auf die eine oder zwei Vorzugsrichtungen abgestrahlt, und
- mindestens 50% der aus dem Lichtleiter (3) ausgekoppelten Lichtmenge werden in Richtung von der Hintergrundbeleuchtung (2) weg ausgekoppelt, **dadurch gekennzeichnet, dass**
- die Auskoppelelemente (6) in ihrer Anzahl pro Fläche und in ihrer Ausdehnung derart gewählt sind, dass der Lichtleiter (3) auf mindestens 50% seiner Fläche einen durchschnittlichen Haze-Wert kleiner als 7% aufweist, gemessen gemäß ASTM D1003, wodurch das von der Hintergrundbeleuchtung (2) mindestens in der Betriebsart B2 in einen eingeschränkten Winkelbereich abgestrahlte Licht beim Durchgang durch den Lichtleiter (3) höchstens geringfügig außerhalb des besagten Winkelbereichs gestreut wird, und
- für die Betriebsart B1 in Abhängigkeit von fest vorgegebenen Grenzwinkeln σ, γ, das ausgekoppelte Licht, welches aus dem Lichtleiter (3) in einem Winkel β austritt, an jedem Punkt der Oberfläche des Lichtleiters (3) in Winkelbereichen, die den Bedingungen 80° > β > γ und / oder -80° < β < -σ, mit 10° < γ < 80° und 10° < σ < 80° genügen, gemessen senkrecht zur Oberfläche des Lichtleiters (3) und in mindestens einer der beiden Vorzugsrichtungen maximal 80%, besonders bevorzugt maximal 50% von der Lichtstärke aufweist, die das Licht aufweist, welches von einem solchen Punkt der Oberfläche des Lichtleiters (3) entlang der Normalen der Oberfläche austritt.

2. Beleuchtungseinrichtung nach einem Anspruch 1, **dadurch gekennzeichnet, dass** der Lichtleiter (3) aus einem transparenten, thermoplastischen oder thermoelastischen Kunststoff oder aus Glas besteht.

3. Beleuchtungseinrichtung nach einem der vorgenannten Ansprüche, **dadurch gekennzeichnet, dass** die Verteilung der Auskoppelelemente (6) auf mindestens einer der Großflächen und / oder innerhalb des Volumens des Lichtleiters (3) so vorgegeben ist, dass das ausgekoppelte Licht auf mindestens 70% der Fläche des Lichtleiters (3) eine Leuchtdichtehomogenität von mindestens 70% erreicht.

4. Beleuchtungseinrichtung nach einem der vorgenannten Ansprüche, **dadurch gekennzeichnet, dass** die Auskoppelelemente (6) maximale Abmessungen von 100 µm, bevorzugt zwischen 1 µm und 30 µm aufweisen.

5. Beleuchtungseinrichtung nach einem der vorgenannten Ansprüche, **dadurch gekennzeichnet, dass** die Auskoppelelemente (6) aus Mikrolinsen und / oder Mikroprismen und / oder diffraktiven Strukturen und / oder dreidimensionalen Strukturelementen und / oder Streuelementen bestehen.

6. Beleuchtungseinrichtung nach einem der Ansprüche 1 bis 5 mit innerhalb des Volumens des Lichtleiters (3) ausgebildeten Auskoppelelementen, **dadurch gekennzeichnet, dass** die Auskoppelelemente als Hohlräume ausgebildet sind, welche bevorzugt die äußere Form von Mikrolinsen, Mikroprismen oder diffraktiven Strukturen aufweisen.

7. Beleuchtungseinrichtung nach Anspruch 6, **dadurch gekennzeichnet, dass** die Hohlräume mit einem gasförmigen, flüssigen oder einem festen Material ausgefüllt sind, wobei das Material einen Brechungsindex aufweist, welcher von dem des für den Lichtleiter (3) verwendeten Materials abweicht, bevorzugt geringer ist, oder dass die Hohlräume luftleer sind.

8. Beleuchtungseinrichtung nach Anspruch 6 oder 7, **dadurch gekennzeichnet, dass** die Hohlräume mit einem gasförmigen, flüssigen oder einem festen Material ausgefüllt sind, wobei das Material einen Haze-Wert aufweist, welcher von dem des für den Lichtleiter (3) verwendeten Materials abweicht, bevorzugt höher ist.

9. Beleuchtungseinrichtung nach einem der Ansprüche 6 bis 8, **dadurch gekennzeichnet, dass** der Lichtleiter (3) aus zwei miteinander an Grenzflächen verbundenen, vorzugsweise gleichartigen Substratschichten gebildet ist und die Hohlräume als Materialaussparungen an mindestens einer der Grenzflächen, bevorzugt die äußere Form von Mikrolinsen, Mikroprismen, dreidimensionalen Strukturelementen oder diffraktiven Strukturen aufweisend, ausgebildet sind.

10. Beleuchtungseinrichtung nach einem der Ansprüche 1 bis 9, **dadurch gekennzeichnet, dass** die Auskoppelelemente (6), wenn diese auf mindestens einer der Großflächen oder Grenzflächen des Lichtleiters (3) angebracht sind, aus einem mit einem Werkzeug, vorzugsweise mechanisch, lithographisch, drucktechnisch oder materialauftragend, materialabtragend, -umwandelnd oder -auflösend, strukturierten Kunststoff oder Glas gebildet sind.

11. Beleuchtungseinrichtung nach einem der vorgenannten Ansprüche, **dadurch gekennzeichnet, dass** die Hintergrundbeleuchtung (2) besteht aus
- einem flächigen Strahler, vorzugsweise einem zweiten -ichtleiter mit seitlich oder auf der Rückseite angeordneten Leuchtmitteln,
- mindestens einem in den flächigen Strahler integrierten und / oder davor angeordneten Lichtkollimator.

12. Beleuchtungseinrichtung nach einem der vorgenannten Ansprüche, **dadurch gekennzeichnet, dass** für die Grenzwinkel σ, γ die Bedingung γ = σ = 40° erfüllt ist.

13. Bildschirm (1), der in mindestens zwei Betriebsarten B1 für einen freien Sichtmodus und B2 für einen eingeschränkten Sichtmodus betrieben werden kann, umfassend
- eine Beleuchtungsanordnung gemäß einem der vorgenannten Ansprüche, sowie
- einen in Betrachtungsrichtung vor dem Lichtleiter (3) angeordneten transmissiven Bildgeber (5).

14. Bildschirm (1) nach Anspruch 13, **dadurch gekennzeichnet, dass** in Betrachtungsrichtung vor dem Bildgeber (5) ein weiterer Lichtleiter (5a) mit Mitteln zur Auskopplung von Licht angeordnet ist, der seitlich von weiteren Leuchtmitteln (4a) mit Licht gespeist werden kann, wobei der weitere Lichtleiter (5a) bevorzugt mit Auskoppelelementen (6) ausgebildet ist.

15. Bildschirm (1) nach einem der Ansprüche 13 oder 14, wobei der Bildgeber mit Pixeln, die ihrerseits aus Subpixeln zusammengesetzt sind, ausgebildet ist, **dadurch gekennzeichnet, dass** jede Abmessung der Auskoppelelemente (6) in Höhe, Tiefe und Breite kleiner ist als das Minimum aus Breite und Höhe der Subpixel des Bildgebers (5).

16. Verwendung einer Beleuchtungseinrichtung nach einem der Ansprüche 1 bis 12 oder eines Bildschirms (1) nach einem der Ansprüche 13 bis 15 in einem Fahrzeug zur wahlweisen Darstellung von Bildinhalten lediglich für den Beifahrer in der Betriebsart B2 und gleichzeitig für den Fahrer und den Beifahrer in der Betriebsart B1.

## Claims

1. An illumination device for a screen (1), which device can be operated in at least two operating modes, B1 for a free viewing mode, and B2 for a restricted viewing mode, comprising
- a flatly extended backlight (2), which emits light in a limited angular range,
- a plate-shaped light guide (3) which is located in front of the backlight (2) in the direction of view and which has coupling-out elements (6) on at least one of the large surfaces and/or within its volume, the light guide (3) being at least 70% transparent for the light emanating from the backlight (2),
- illuminants (4) arranged laterally on at least one narrow side of the light guide (3),
- wherein, in operating mode B2, the backlight (2) is switched on and the illuminants (4) are switched off, and in operating mode B1, at least the illuminants (4) are switched on, wherein
- a distribution of the coupling-out elements (6) on at least one of the large surfaces and/or within the volume of the light guide (3) is predetermined in such a way that light irradiated into the light guide (3) by the illuminants (4) and coupled out of the light guide (3) by the coupling-out elements (6) satisfies the following conditions:
- at least 30% of the quantity of light coupled out on one of the large surfaces in an angular range of -50° to +50° to the surface normal of the large surface is radiated in an angular range of -20° to +20° to the surface normal of the large surface and relative to one or two predetermined, preferred directions perpendicular to each other and to the surface normal, and/or at least 40% of the quantity of light coupled out on one of the large surfaces in an angular range of -50° to +50° to the surface normal of the large surface is radiated in an angular range of -30° to +30° with respect to the one or two preferred directions, and
- at least 50% of the quantity of light coupled out of the light guide (3) is coupled out in the direction away from the backlight (2),
**characterised in that**
- the number of coupling-out elements (6) per area and their extent are selected such that the light guide (3) has on at least 50% of its area an average haze value of less than 7%, measured according to ASTM D1003, whereby the light emitted by the backlight (2) at least in the B2 mode into a limited angular range is scattered, at most slightly, outside said angular range when passing through the light guide (3), and
- for operating mode B1 as a function of fixed critical angles σ, γ, the coupled-out light emerging from the light guide (3) at an angle β has, at any point on the surface of the light guide (3) in angular ranges satisfying the conditions 80° > β > γ and / or -80° < β < -σ, with 10° < γ < 80° and 10° < σ < 80 measured perpendicularly to the surface of the light guide (3) and in at least one of the two preferred directions, a maximum of 80%, particularly preferably a maximum of 50% of the luminous intensity of the light emerging from such a point on the surface of the light guide (3) along the normal of the surface.

2. The illumination device according to claim 1, **characterised in that** the light guide (3) consists of a transparent, thermoplastic or thermoelastic plastic or of glass.

3. The illumination device according to any one of the preceding claims, **characterised in that** the distribution of the coupling-out elements (6) on at least one of the large surfaces and/or within the volume of the light guide (3) is predetermined in such a way that the coupled-out light achieves a luminance homogeneity of at least 70% on at least 70% of the area of the light guide (3).

4. The illumination device according to any one of the preceding claims, **characterised in that** the coupling-out elements (6) have maximum dimensions of 100 µm, preferably between 1 µm and 30 µm.

5. The illumination device according to any one of the preceding claims, **characterised in that** the coupling-out elements (6) consist of microlenses and/or microprisms and/or diffractive structures and/or three-dimensional structural elements and/or scattering elements.

6. The illumination device according to any one of claims 1 to 5 comprising coupling-out elements formed within the volume of the light guide (3), **characterised in that** the coupling-out elements are formed as cavities which preferably have the outer shape of microlenses, microprisms or diffractive structures.

7. The illumination device according to claim 6, **characterised in that** the cavities are filled with a gaseous, liquid or solid material, said material having a refractive index which differs from that of the material used for the light guide (3) and is preferably lower, or **in that** the cavities are void of air.

8. The illumination device according to claim 6 or 7, **characterised in that** the cavities are filled with a gaseous, liquid or solid material, said material having a haze value different from, preferably higher than, that of the material used for the light guide (3).

9. The illumination device according to any one of claims 6 to 8, **characterised in that** the light guide (3) is formed from two preferably similar substrate layers connected to one another at interfaces and the cavities are formed as material recesses at at least one of the interfaces, preferably having the outer shape of microlenses, microprisms, three-dimensional structural elements or diffractive structures.

10. The illumination device according to any one of claims 1 to 9, **characterised in that** the coupling-out elements (6), when mounted on at least one of the large surfaces or interfaces of the light guide (3), are formed from a plastic or glass structured with a tool, preferably mechanically, lithographically, by printing or by material application, material removal, material conversion or material dissolution.

11. The illumination device according to any one of the preceding claims, **characterised in that** the backlight (2) consists of
- a planar spotlight, preferably a second light guide with light sources arranged on the side or on the back,
- at least one light collimator integrated into the planar spotlight and/or arranged in front of it.

12. The illumination device according to any one of the preceding claims, **characterised in that** the critical angles σ, γ satisfy the condition γ = σ = 40°.

13. A screen (1), which can be operated in at least two modes B1 for a free viewing mode and B2 for a restricted viewing mode, comprising
- an illumination device according to any one of the preceding claims, and
- a transmissive image sensor (5) arranged in front of the light guide (3) in the viewing direction.

14. The screen (1) according to claim 13, **characterised in that** a further light guide (5a) with means for coupling out light is arranged in front of the image sensor (5) in the viewing direction, which light guide can be fed with light laterally from further illuminants (4a), wherein
the further light guide (5a) is preferably formed with coupling-out elements (6).

15. The screen (1) according to any one of claims 13 or 14, wherein the image sensor is formed with pixels, which in turn are composed of subpixels, **characterised in that** each dimension of the coupling-out elements (6) in height, depth and width is smaller than the minimum of width and height of the subpixels of the image sensor (5).

16. Use of an illumination device according to any one of claims 1 to 12 or of a screen (1) according to any one of claims 13 to 15 in a vehicle for optional display of image contents only for the front passenger in operating mode B2 and simultaneously for the driver and the front passenger in operating mode B1.

## Revendications

1. Dispositif d'illumination pour un écran (1), qui peut fonctionner dans au moins deux modes de fonctionnement, B1 pour un mode de visualisation dégagée et B2 pour un mode de visualisation restreinte, ledit dispositif comprenant
- un moyen de rétroéclairage (2) qui s'étend sur une grande surface et qui émet de la lumière dans une plage angulaire limitée,
- un guide de lumière (3) en forme de plaque qui se trouve devant ledit moyen de rétroéclairage (2) dans la direction d'observation et qui présente des éléments de découplage (6) sur au moins une des grandes surfaces et/ou dans son volume, le guide de lumière (3) étant au moins à 70% transparent à la lumière émanant du moyen de rétroéclairage (2),
- des moyens d'éclairage (4) disposés latéralement sur au moins un côté étroit du guide de lumière (3),
- où, en mode de fonctionnement B2, le moyen de rétroéclairage (2) est allumé et les moyens d'éclairage (4) sont éteints, et où, en mode de fonctionnement B1, au moins les moyens d'éclairage (4) sont allumés, où
- une répartition des éléments de découplage (6) sur au moins une des grandes surfaces et/ou dans le volume du guide de lumière (3) est prédéterminée de telle sorte que la lumière irradiée dans le guide de lumière (3) par les moyens d'éclairage (4) et découplée du guide de lumière (3) par les éléments de découplage (6) remplisse les conditions suivantes :
- au moins 30 % de la quantité de lumière découplée sur l'une des grandes surfaces dans une plage angulaire de -50° à +50° par rapport à la normale à la grande surface est rayonnée dans une plage angulaire de - 20° à +20° par rapport à la normale à la grande surface et par rapport à une ou deux directions préférées prédéterminées, perpendiculaires entre elles et à la normale à la surface, et/ou au moins 40 % de la quantité de lumière découplée sur l'une des grandes surfaces dans une plage angulaire de -50° à +50° par rapport à la normale à la grande surface est rayonnée dans une plage angulaire de -30° à +30° par rapport à l'une ou les deux directions préférées, et
- au moins 50 % de la quantité de lumière découplée du guide de lumière (3) est découplée dans la direction opposée au moyen de rétroéclairage (2),
**caractérisé en ce que**
- le nombre d'éléments de découplage (6) par surface et leur étendue sont choisis de telle sorte que le guide de lumière (3) présente une valeur de Haze moyenne inférieure à 7 %, mesurée selon la norme ASTM D1003, sur au moins 50 % de sa surface, la lumière émise par le moyen de rétroéclairage (2) au moins en mode de fonctionnement B2 dans une plage angulaire limitée étant diffusée au plus légèrement en dehors de ladite plage angulaire lorsqu'elle traverse le guide de lumière (3), et
- pour le mode de fonctionnement B1 en fonction d'angles critiques fixes σ, γ, la lumière découplée sortant du guide de lumière (3) sous un angle β présente, en tout point de la surface du guide de lumière (3) dans des plages angulaires satisfaisant aux conditions 80° > β > γ et/ou -80° < β < -σ, avec 10° < γ < 80° et 10° < σ < 80 mesurées perpendiculairement à la surface du guide de lumière (3) et dans au moins une des deux directions préférées, au maximum 80 %, et de préférence au maximum 50 % de l'intensité lumineuse de la lumière émise à partir d'un tel point de la surface du guide de lumière (3) selon la normale à la surface.

2. Dispositif d'illumination selon la revendication 1, **caractérisé en ce que** le guide de lumière (3) est constitué d'une matière plastique transparente, thermoplastique ou thermoélastique ou de verre.

3. Dispositif d'illumination selon l'une quelconque des revendications précédentes, **caractérisé en ce que** la répartition des éléments de découplage (6) sur au moins une des grandes surfaces et/ou dans le volume du guide de lumière (3) est prédéterminée de telle manière que la lumière découplée atteigne une homogénéité de luminance d'au moins 70% sur au moins 70% de la surface du guide de lumière (3).

4. Dispositif d'illumination selon l'une quelconque des revendications précédentes, **caractérisé en ce que** les éléments de découplage (6) ont des dimensions maximales de 100 µm, de préférence entre 1 µm et 30 µm.

5. Dispositif d'illumination selon l'une quelconque des revendications précédentes, **caractérisé en ce que** les éléments de découplage (6) sont constitués de microlentilles et/ou de microprismes et/ou de structures diffractives et/ou d'éléments structurels tridimensionnels et/ou d'éléments de diffusion.

6. Dispositif d'illumination selon l'une quelconque des revendications 1 à 5 avec des éléments de découplage formés dans le volume du guide de lumière (3), **caractérisé en ce que** les éléments de découplage sont formés comme des cavités qui ont de préférence la forme extérieure de microlentilles, de microprismes ou de structures diffractives.

7. Dispositif d'illumination selon la revendication 6, **caractérisé en ce que** les cavités sont remplies d'un matériau gazeux, liquide ou solide, ledit matériau ayant un indice de réfraction qui diffère de celui du matériau utilisé pour le guide de lumière (3), étant de préférence inférieur, ou **en ce que** les cavités sont vides d'air.

8. Dispositif d'illumination selon la revendication 6 ou 7, **caractérisé en ce que** les cavités sont remplies d'un matériau gazeux, liquide ou solide, ledit matériau ayant une valeur Haze qui diffère de et est de préférence supérieure à celle du matériau utilisé pour le guide de lumière (3).

9. Dispositif d'illumination selon l'une quelconque des revendications 6 à 8, **caractérisé en ce que** le guide de lumière (3) est formé de deux couches de substrat, de préférence similaires, reliées l'une à l'autre au niveau des interfaces et les cavités sont formées comme des évidements de matériau au niveau d'au moins une des interfaces, ayant de préférence la forme extérieure de microlentilles, de microprismes, d'éléments structurels tridimensionnels ou de structures diffractives.

10. Dispositif d'illumination selon l'une quelconque des revendications 1 à 9, **caractérisé en ce que** les éléments de découplage (6), lorsqu'ils sont montés sur au moins l'une des grandes surfaces ou des surfaces limites du guide de lumière (3), sont formés d'une matière plastique ou d'un verre structuré avec un outil, de préférence mécaniquement, lithographiquement, par impression ou par application de matière, enlèvement de matière, transformation de matière ou dissolution de matière.

11. Dispositif d'illumination selon l'une quelconque des revendications précédentes, **caractérisé en ce que** l'éclairage de fond (2) consiste en
- un émetteur plat, de préférence un deuxième guide de lumière avec des illuminants disposés latéralement ou à l'arrière,
- au moins un collimateur de lumière intégré dans l'émetteur plat et/ou disposé devant celui-ci.

12. Dispositif d'illumination selon l'une quelconque des revendications précédentes, **caractérisé en ce que** pour les angles critiques σ, γ la condition γ = σ = 40° est remplie.

13. Écran (1), qui peut fonctionner dans au moins deux modes de fonctionnement, B1 pour un mode de visualisation dégagée et B2 pour un mode de visualisation restreinte, ledit écran comprenant
- un dispositif d'illumination selon l'une quelconque des revendications précédentes, et
- un imageur transmissif (5) disposé devant le guide de lumière (3) dans la direction d'observation.

14. Écran (1) selon la revendication 13, **caractérisé en ce qu'**un guide de lumière supplémentaire (5a) avec des moyens de découplage de la lumière est disposé devant l'imageur (5) dans la direction d'observation, qui peut être alimenté latéralement en lumière par d'autres moyens d'éclairage (4a),
le guide de lumière supplémentaire (5a) étant de préférence réalisé avec des éléments de découplage (6).

15. Écran (1) selon l'une quelconque des revendications 13 ou 14, l'imageur étant formé de pixels qui sont à leur tour composés de sous-pixels, **caractérisé en ce que** chaque dimension des éléments de découplage (6) en hauteur, profondeur et largeur est plus petite que le minimum de largeur et de hauteur des sous-pixels de l'imageur (5).

16. Utilisation d'un dispositif d'illumination selon l'une quelconque des revendications 1 à 12 ou d'un écran (1) selon l'une quelconque des revendications 13 à 15 dans un véhicule pour l'affichage facultatif de contenu en images uniquement pour le passager avant dans le mode de fonctionnement B2 et simultanément pour le conducteur et le passager avant dans le mode de fonctionnement B1.
